# EUROPEAN PATENT APPLICATION

(11) **EP 2 302 786 A1**
(43) Date of publication of application: **30.03.2011**
(21) Application number: 09809016.0
(22) Date of filing: 16.06.2009
(51) Int. Cl.: H02P 9/14, H02P 9/48, H02P 9/44, H02H 7/06

(54) **EXCITATION CONTROL SYSTEM FOR MARINE DIESEL BRUSHLESS DOUBLY FED SHAFT GENERATOR AND CONTROL METHOD THEREOF**

(30) Priority: 27.03.2009 CN 200910061296
(71) Applicant: Huazhong University of Science and Technology, Wuhan City Hubei 430074 (CN); China Changjiang National Shipping Group Motor Factory, Jiangxia District Wuhan Hubei 430205 (CN)
(72) Inventor: CHEN, Bing, Wuhan Hubei 430074 (CN); AI, Wu, Wuhan Hubei 430074 (CN); SHU, Dixian, Wuhan Hubei 430205 (CN); ZHANG, Bangfa, Wuhan Hubei 430205 (CN); XIN, Shiwei, Wuhan Hubei 430205 (CN); LI, Bin, Wuhan Hubei 430205 (CN); WEI, Zhongchao, Wuhan Hubei 430074 (CN)
(74) Representative: Zeuner & Summerer
(86) International application number: PCT/CN2009/072296
(87) International publication number: WO 2010/108342

(57) **Abstract**

This invention publishes a type of excitation control system structure and control method for ship diesel engine brushless double feed shaft-driven generator. The excitation control structure of ship brushless double feed shaft-driven generator includes contactor, step-up transformer, rectification feed unit, DC compensation unit, inverter unit, control panel, excitation controller, AB phase voltage, CA phase voltage sensor, BC phase voltage sensor; based on the control method for control system structure, initial excitation, constant-voltage control, constant frequency control, undervoltae control and overvoltage protection for ship brushless double feed shaft-driven generator can be realized.

## Description

### Field of the Invention

This invention falls into generator automatic control technology field. Specifically, it is a type of control system structure and control method for ship diesel engine brushless double feed shaft-driven generator.

### Background of the Invention

Presently, independent diesel engine generator is extensively used on ship, which costs much light diesel each year. If we can make full use of main motor of ship to generate power via shaft, then much energy and fare can be saved. But the speed of main motor of ship is variable during navigation, which requires the generator and control system has variable-speed voltage stability and power generation with constant frequency. The technicians in this field have provided many solutions for using main motor of ship to generate power via shaft, but these solutions are inapplicable. The basic causes are that, ship diesel engine brushless double feed shaft-driven generator is a type of ship diesel engine shaft-driven generator using heavy oil, and the brushless double feed motor is different from traditional structure in theory. Hence, the inventor proposed the idea for ship main motor shaft-driven generation that, the rotator is equipped with pickup coil, both ends of which are short-circuited, and the stator is equipped with two sets of three phase windings: power winding and control winding. The output of power winding is used as the main power output of brushless double feed generator, to supply power for ship. The purpose of control winding is to establish and adjust excited current. When speed of diesel engine and electrical load of generator are changed, to keep stable output voltage and frequency of generator, the current of control winding must be adjusted realtime.

Centered around above technical background, in published patents or literatures, the inventor has not retrieved literatures on control system for ship diesel engine shaft-driven brushless double feed generator.

### Summary of the Invention

The first purpose of this invention is to provide a type of excitation control system structure for ship diesel engine brushless double feed shaft-driven generator, the second purpose is to provide a method of controlling excitation control system structure of ship diesel engine brushless double feed shaft-driven generator. Above contents try to enable ship diesel engine brushless double feed shaft-driven generator to self excite and generate power with stable voltage and frequency, under varying speed of shaft of main diesel engine of ship, and apply offset frequency control policy near natural synchronous speed point, so that the load feature of motor can transit smoothly with certain loading capacity. This type of new control system provides higher operating efficiency, energy-saving, better stability and high reliability for ship diesel engine brushless double feed shaft-driven generator.

To realize the objective of this invention, this invention proposes the following technical solution for control system structure of ship brushless double feed shaft-driven generator: a type of excitation control system structure of ship diesel engine brushless double feed shaft-driven generator, which is connected in between power winding, control winding, revolving coder, ship power station ship 330V accumulator of a brushless double feed shaft-driven generator, the characteristics of which are: the excitation control system structure of stated ship brushless double feed shaft-driven generator is composed of contactor, step-up transformer, rectification feedback unit, DC compensation unit, inverter unit, control panel ,excitation controller, AC phase voltage sensor, CA phase voltage sensor and BC phase voltage sensor.

The input terminal of stated contactor is connected with three phase power winding of shaft-driven generator, and the output terminal of contactor is connected with ship power station; the input terminal of step-up transformer is connected with three phase power winding of shaft-driven generator, and output end of step-up transformer is connected with AC input terminal of rectification feedback unit; rectification feed unit is connected with DC input terminal of inverter unit; the input terminal of DC compensation unit is connected with DC 220V accumulator, and output terminal of DC compensation unit is connected with DC input terminal of inverter unit; three phase AC output terminal of inverter unit is connected with control winding of shaft-driven generator; the input terminal of excitation controller is connected with control panel, AC phase voltage sensor, CA phase voltage sensor, BC phase voltage sensor, and revolving coder of shaft-driven generator, the output terminal of excitation controller is connected with contactor, DC compensation unit and inverter unit.

The step-up transformer, rectification feed unit, DC compensation unit and inverter unit provide excited current for control winding of generator. The power winding of generator is connected with AC terminal of rectification feed unit via three phase step-up transformer, DC terminal of rectification feed unit, output terminal of DC compensation unit and DC terminal of inverter unit, then connected with DC bus together, the 220V accumulator on ship is connected with input terminal of DC compensation unit, the AC output terminal of inverter unit is connected with control winding of shaft-driven brushless double feed generator.

The revolving coder of this invention is connected with shaft of generator. Its signal output terminal is connected with excitation controller, Voltage hallsensor detects the output voltage of power winding of generator, the signal output terminal is connected with excitation controller. Control panel is connected with excitation controller to provide operation instructs.

In this invention, above step-up transformer and rectification feed unit keep the voltage of DC bus in the scope in which inverter unit can normal operate. When output voltage of generator is lower, the step-up transformer can enhance the voltage of DC bus, when the speed of generator is higher, energy is feedback to DC bus to enhance the voltage of DC bus. Rectification feed unit can feed the energy of DC bus to output terminal of generator, so as to keep stable voltage of DC bus.

Above inverter unit in this invention invert the direct current of DC bus to three phase AC for control winding of generator. The amplitude, frequency and phase sequence of voltage of three phase AC is dependant on control instruct signal of excitation controller.

In this invention, the input terminal of above DC compensation unit is connected with DC 220V accumulator of ship, and output terminal is connected with DC bus. When the generator is excited initially, the DC compensation unit will provide energy for initial excitation. When generator operates normally, the stored energy of capacity in DC compensation unit can be used to compensate the instant drop of voltage of DC bus.

In this invention, above excitation controller realize initial excitation and constant frequency and stable voltage control for brushless double feed shaft-driven generator under various speed and load of ship diesel engine, according to revolving coder and feedback signal of hallsensor, control contactor, DC compensation unit, the amplitude, frequency and phase sequence of output voltage of inverter unit.

As for the second objective of this invention, the method of controlling control system structure of ship diesel engine brushless double feed shaft-driven generator is as follows:
1) Method of initial excitation: when brushless double feed generator is initially excited to generate power driven by shaft of ship diesel engine as low speed, excitation controller breaks the contactor, so that the power winding of generator is cut from electrical load, DC 220V accumulator on ship supplies excitation current to control winding of generator via DC compensation unit and inverter unit for initial excitation purpose. When idle load output voltage of generator is stable, excitation controller breaks the contactor and connects with electric load. At the same time, the voltage of DC bus is higher than output voltage of DC compensation unit, and DC compensation unit is cut off automatically, meanwhile excitation control system use the power generated by shaft-driven generator to excite the shaft-driven generator, the initial excitation process is finished;
2) Constant frequency method: excitation controller realtime adjust the frequency of output voltage of inverter unit according to speed of generator corresponding to revolving coder, to keep the AC frequency of generator at 50HZ. The frequency of output voltage of inverter unit is proportional to the difference between real speed of generator and natural synchronous point. When speed of generator is higher than natural synchronous speed, the control inverter unit of excitation controller outputs positive phase sequence; when speed of generator is lower than natural synchronous point speed, excitation control controls inverter to output inverted phase sequence; when speed of generator is equivalent to natural synchronous speed point, to keep the frequency of output AC of generator at 50Hz, the output frequency of inverter should be 0Hz, but this will result in large loss of inverter, so excitation controller controls inverter to output 1Hz, in order to decrease loss of inverter via offset frequency;
3) Method of constant voltage: excitation controller realtime adjust the amplitude of output voltage of inverter, according to output voltage of generator corresponding to voltage sensor and frequency of present excitation current, so as to keep the effective value of output AC of power winding of generator at 400V;
4) Uncervoltage protection method: when load increases sharply and results in too low voltage of DC bus, the output voltage of DC compensation unit is higher than voltage of DC bus, the DC compensation unit will cur off automatically, to keep normal operation sate of inverter, at the same time, excitation controller controls inverter to enhance the amplitude of output voltage, so that the output voltage of generator increases to normal setting value, meanwhile the voltage of DC bus will increase respectively, when voltage of DC bus is higher than output voltage of DC compensation unit, the DC compensation unit will cut off automatically;
5) Overvoltage protection method: when shaft of ship diesel engine drives brushless double feed shaft-driven generator at high speed, and the voltage of DC bus is higher than feed initial voltage of rectification feed unit, the rectification feed unit will automatically releases the stored energy in capacity of DC bus to output terminal of brushless double feed shaft-driven generator, so that the voltage of Dc bus is not so higher that inverter cannot operate normally.

The advantage and technical effect of this invention lie in that: provide a type of control system structure and control method for ship diesel engine shaft-driven brushless double feed generator, so that ship diesel engine shaft-driven brushless double feed generator can realize self initial excitation with constant voltage and frequency, under working condition of varying speed of shaft of main diesel engine of ship, apply offset control policy near phase transition point when brushless double feed generator is operating, so that load feature of generator transits smoothly with certain loading capacity. This new type of control system structure and method provides higher operating efficiency, energy-saving, better stability and reliability for ship diesel engine shaft-driven brushless double feed generator.

### Description of the Drawings

Figure 1 is overall structure diagram for this invetion
Figure 2 is excitation controller structure diagram
Figure 3 is Dc compensation unit structure diagram

### Specific Embodiments

We detail this invention further together with attached figures in the following.

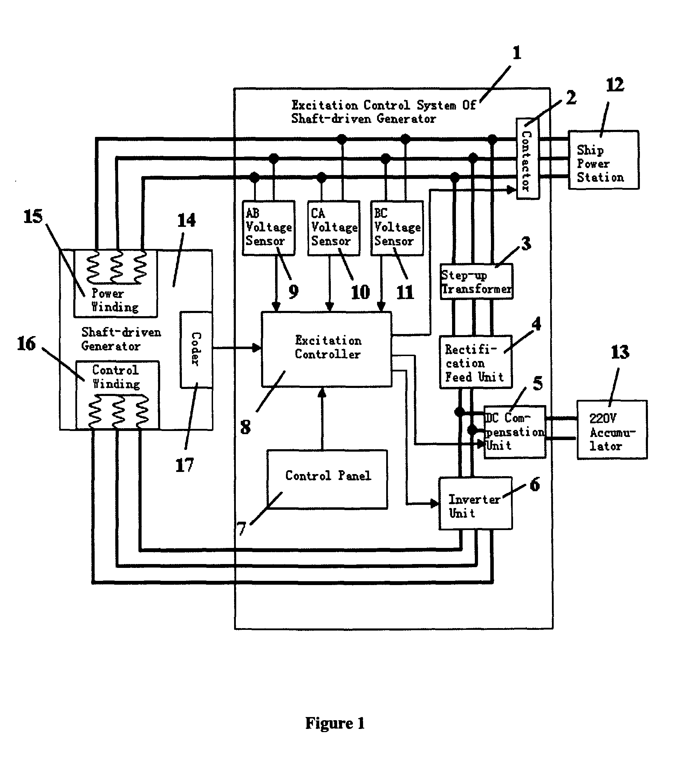

In figure 1, the excitation control structure of ship brushless double feed shaft-driven generator is connected with the power winding 15, control winding 16, revolving coder 17, ship power station 12 and ship 220V accumulator 13 of a brushless double feed shaft-driven generator 15. Its characteristics are: the excitation control system structure 1 of ship brushless double feed shaft-driven generator includes contactor 2, step-up transformer 3, rectification feed unit 4, DC compensation unit 5, inverter 6, control panel 7, excitation controller 8, AB phase voltage sensor 9, CA phase voltage sensor, BC phase voltage sensor 11. in which:
The input terminal of contactor 2 is connected with the three phase power winding 15 of shaft-driven generator 14, the output terminal of contactor 2 is connected with ship power station 12; the input terminal of step-up transformer 3 is connected with three phase power winding 15 of shaft-driven generator 14, the output terminal of step-up transformer 3 is connected with AC input terminal of rectification feed unit 4; rectification feed unit 4 is connected with DC input terminal of inverter 6; input terminal of DC compensation unit 5 is connected with DC 220V accumulator, the output terminal of DC compensation unit 5 is connected with DC input terminal of inverter 6; three phase AC output terminal of inverter 6 is connected with control winding 16 of shaft-driven generator 14; the input terminal of excitation controller 8 is connected with control panel 7, AB phase voltage sensor 9, CA phase voltage sensor 10, BC phase voltage sensor 11, the revolving coder 17 of shaft-driven generator 16, the output end of excitation controller 8 is connected with contactor 2, DC compensation unit and inverter 6.

The function of contactor 2 is to make sure power winding 15 is broken with ship power station 12 during initial excitation of shaft-driven generator. The contactor 2 is can be closed only the initial excitation process is finished and the output voltage of power winding 15 and shaft-driven generator 14 is stable, shaft-driven generator 14 supplies power for ship power station 12.

The function of step-up transformer is to keep the output voltage of power winding 15 of shaft-driven generator at rating voltage 400V, meanwhile enhance the input voltage of rectification feed unit, which is helpful to keep stable voltage of DC bus. Step-up transformer 3 can be realized via autoformer.

The function of rectification feed unit 4 is to realize two-way current between power winding 15 of shaft-driven generator 14 and DC bus. Rectification feed unit can invert three phase AC into DC and supply it for DC bus, further to control winding 16 of shaft-driven generator 14 via inverter 6, when control winding 16 is supplying power, the rectification feed unit 4 is working in feed mode, the power generated by control winding 16 is feed to output terminal of three phase 15 via inverter 6, rectification feed unit 4 and step-up transformer 3.

The function of DC compensation unit 5 is to provide initial excitation power source for shaft-driven generator 15 and keep stable voltage of DC bus during operating process.

The function of inverter 6 is to invert the voltage of DC bus into amplitude, frequency and phase sequence adjustable three phase AC voltage and output to the three phase control winding 16 of shaft-driven generator 14.

The function of control panel 7 is to provide start and stop signals for excitation control system 1 of shaft-driven generator, and excitation controller 8 realizes related control when it receives the signals.

The function of excitation controller 8 is to realize initial excitation, constant voltage and constant frequency control via contactor 2, DC compensation unit 5 and inverter 6.

The function of the three voltage sensor 9, 10 and 11 is to provide instant measurement of output voltage of shaft-driven generator for excitation controller 8, these sensors can be used by hallsensors.

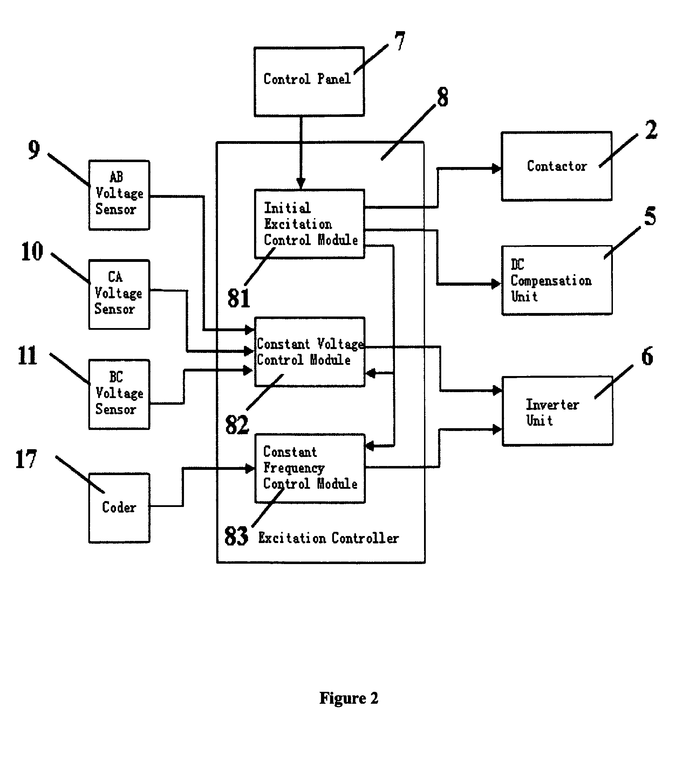

In figure 2, excitation controller 8 is connected with control panel 7, AB phase voltage sensor 9, CA phase voltage sensor 10, BC phase voltage sensor 11, coder 17, contactor 2, DC compensation unit 5 and inverter 6. its characteristics are: the excitation controller 8 includes initial excitation control module 81, constant voltage control module 82 and constant frequency control module 83. in which:
The input terminal of initial excitation control module 81 is connected with output terminal of control panel 7, the output terminal of initial excitation control module 81 is connected with input terminals of contactor 2, DC compensation unit 5, constant voltage control module 82, constant frequency control module 83; the output terminals of AB phase voltage sensor 9, CA phase voltage sensor 10, BC phase voltage sensor 11 are connected with input terminal of control module 82; the output terminal of coder 17 is connected with input terminal of constant-frequency control module 83; the input terminals of constant-voltage control module 82 and constant-frequency control module 83 are connected with input terminals of inverter 6.
The function of initial excitation control module 81 is to realize initial excitation of shaft-driven generator 14. when it receives start signal from control panel, the initial excitation control module 81 should cut off contactor 2 first, then control DC compensation unit to charge the DC bus, then enhance excitation voltage gradually via constant voltage control module 82 and constant frequency control module 83 and inverter 6, so that output voltage of power winding 15 of shaft-driven generator 14 reaches stable 400V at this time, initial excitation control module 81 breaks the contactor 2, shaft-driven generator 14 can supply power for ship power station 12. During initial excitation process, the output voltage of DC compensation unit 5 is higher than output voltage of rectification feed unit 4, excitation energy is from DC 220V accumulator 13, when initial excitation process is finished, the output voltage of rectification feed unit 4 is higher than output voltage of DC compensation unit 5, and DC compensation unit 5 will not output current, energy for excitation comes from power winding 15 of shaft-driven generator 14.

The function of constant voltage control module 82 is to make sure the output voltage of power winding 15 of shaft-driven generator is at 400V stably, with instant fluctuation less than 10%. The constant voltage control module adjusts the amplitude of output voltage of inverter through comparing the difference between measurement of three phase voltage sensors 9, 10 and 11 and rating value 400V, so that power winding 15 can output stable voltage.

The function of constant frequency control module 83 is to make sure the output frequency of power winding 15 of shaft-driven generator 14 is at rating value 50Hz, with frequency error less than 0.1 Hz. The constant frequency control module adjusts the frequency of output voltage of inverter 6through comparing the difference between real speed of shaft-driven generator 14 detected by coder 17 and natural synchronous speed, so that power winding 15 can output stable frequency.

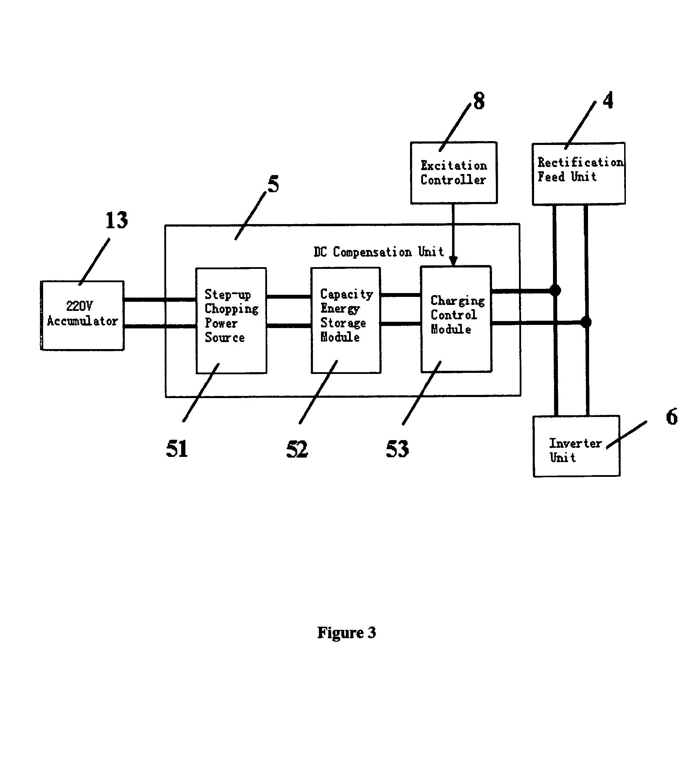

In figure 3, DC compensation unit 5 is connected in between DC 220V accumulator 13, rectification feed unit 4, inverter 6 and excitation controller 8. its characteristics are: the DC compensation unit 5 includes step-up chopping power source 51, capacity energy storage module 52 and charging control module 53. in which:
The imputer terminal of step-up chopping power source 51 is connected with output terminal of DC 220V accumulator 13; the input terminal of capacity energy storage module 52 is connected with output terminal of step-up chopping power source 51; the input terminal of charging control module 53 is connected with output terminal of energy storage module 52 of capacity and output terminal of excitation controller 8; the output terminal of charging control module 53 is connected with output terminal of rectification feed unit 4, and input terminal of inverter 6.

The function of step-up chopping power source 51 is to increase the voltage of 220V DC of accumulator 13 to more than 400V which can supply inverter 6. the capacity energy storage module is to provide peak power for DC bus, when output voltage of power winding 15 of shaft-driven generator 14 decreases, the voltage of DC bus will decrease accordingly, while capacity energy storage module can supply for DC bus instantly to keep stable voltage of bus. The function of charging control module is to avoid instant large current resulted from direct charging to internal capacities of inverter 6 during initial exciation process of shaft-driven generator 14.

## Claims

1. A type of excitation control system structure for ship diesel engine brushless double feed shaft-driven generator, as is connected in between power winding, control winding, revolving coder, ship power station ship 330V accumulator of a brushless double feed shaft-driven generator, the characteristics of which are: the excitation control system structure of stated ship brushless double feed shaft-driven generator is composed of contactor, step-up transformer, rectification feedback unit, DC compensation unit, inverter unit, control panel ,excitation controller, AC phase voltage sensor, CA phase voltage sensor and BC phase voltage sensor.

2. The characteristics of excitation control system structure of ship diesel engine brushless double feed shaft-driven generator as stated in claim 1 are: the input terminal of stated contactor is connected with three phase power winding of shaft-driven generator, and the output terminal of contactor is connected with ship power station; the input terminal of step-up transformer is connected with three phase power winding of shaft-driven generator, and output end of step-up transformer is connected with AC input terminal of rectification feedback unit; rectification feed unit is connected with DC input terminal of inverter unit; the input terminal of DC compensation unit is connected with DC 220V accumulator, and output terminal of DC compensation unit is connected with DC input terminal of inverter unit; three phase AC output terminal of inverter unit is connected with control winding of shaft-driven generator; the input terminal of excitation controller is connected with control panel, AC phase voltage sensor, CA phase voltage sensor, BC phase voltage sensor, and revolving coder of shaft-driven generator, the output terminal of excitation controller is connected with contactor, DC compensation unit and inverter unit.

3. The characteristics of excitation control system structure of ship diesel engine brushless double feed shaft-driven generator as stated in claim 1 are:
1) Method of initial excitation: when brushless double feed generator is initially excited to generate power driven by shaft of ship diesel engine as low speed, excitation controller breaks the contactor, so that the power winding of generator is cut from electrical load, DC 220V accumulator on ship supplies excitation current to control winding of generator via DC compensation unit and inverter unit for initial excitation purpose. When idle load output voltage of generator is stable, excitation controller breaks the contactor and connects with electric load. At the same time, the voltage of DC bus is higher than output voltage of DC compensation unit, and DC compensation unit is cut off automatically, meanwhile excitation control system use the power generated by shaft-driven generator to excite the shaft-driven generator, the initial excitation process is finished;
2) Constant frequency method: excitation controller realtime adjust the frequency of output voltage of inverter unit according to speed of generator corresponding to revolving coder, to keep the AC frequency of generator at 50HZ. The frequency of output voltage of inverter unit is proportional to the difference between real speed of generator and natural synchronous point. When speed of generator is higher than natural synchronous speed, the control inverter unit of excitation controller outputs positive phase sequence; when speed of generator is lower than natural synchronous point speed, excitation control controls inverter to output inverted phase sequence; when speed of generator is equivalent to natural synchronous speed point, to keep the frequency of output AC of generator at 50Hz, the output frequency of inverter should be 0Hz, but this will result in large loss of inverter, so excitation controller controls inverter to output 1Hz, in order to decrease loss of inverter via offset frequency;
3) Method of constant voltage: excitation controller realtime adjust the amplitude of output voltage of inverter, according to output voltage of generator corresponding to voltage sensor and frequency of present excitation current, so as to keep the effective value of output AC of power winding of generator at 400V;
4) Uncervoltage protection method: when load increases sharply and results in too low voltage of DC bus, the output voltage of DC compensation unit is higher than voltage of DC bus, the DC compensation unit will cur off automatically, to keep normal operation sate of inverter, at the same time, excitation controller controls inverter to enhance the amplitude of output voltage, so that the output voltage of generator increases to normal setting value, meanwhile the voltage of DC bus will increase respectively, when voltage of DC bus is higher than output voltage of DC compensation unit, the DC compensation unit will cut off automatically;
5) Overvoltage protection method: when shaft of ship diesel engine drives brushless double feed shaft-driven generator at high speed, and the voltage of DC bus is higher than feed initial voltage of rectification feed unit, the rectification feed unit will automatically releases the stored energy in capacity of DC bus to output terminal of brushless double feed shaft-driven generator, so that the voltage of Dc bus is not so higher that inverter cannot operate normally.
